(19) Europäisches Patentamt / European Patent Office / Office européen des brevets

(11) **EP 2 717 111 B1**

(12) **EUROPEAN PATENT SPECIFICATION**

(45) Date of publication and mention
of the grant of the patent:
**17.04.2019 Bulletin 2019/16**

(21) Application number: **11866378.0**

(22) Date of filing: **24.05.2011**

(51) Int Cl.:
*G05F 1/70* *(2006.01)*　　　*H02J 3/18* *(2006.01)*

(86) International application number:
**PCT/JP2011/061822**

(87) International publication number:
**WO 2012/160646 (29.11.2012 Gazette 2012/48)**

(54) **VAR COMPENSATOR, AND SYSTEM AND METHOD THEREFOR**

BLINDLEISTUNGSKOMPENSATOR SOWIE SYSTEM UND VERFAHREN DAFÜR

COMPENSATEUR VAR, ET SYSTÈME ET PROCÉDÉ ASSOCIÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.04.2014 Bulletin 2014/15**

(73) Proprietor: **Hitachi, Ltd.**
**Tokyo 100-8280 (JP)**

(72) Inventor: **WATANABE Hideyuki**
**Tokyo 100-8280 (JP)**

(74) Representative: **Manitz Finsterwald**
**Patent- und Rechtsanwaltspartnerschaft mbB**
**Postfach 31 02 20**
**80102 München (DE)**

(56) References cited:
**WO-A1-98/27476**　　**JP-A- S 645 329**
**JP-A- 1 005 329**　　**JP-A- H0 956 074**
**JP-A- H11 155 236**　　**JP-A- 2000 276 243**
**JP-A- 2000 276 243**　　**JP-A- 2011 036 033**
**US-B1- 6 407 536**

**Description**

Technical Field

The present invention relates to a VAR compensating system that compensates voltage fluctuations in a power distribution system, and a VAR compensating method. A VAR compensating system and a VAR compensating method as descried in the preamble portions of the patent claims 1 and 8, respectively, are known from JP S64 5329 A.

Background Art

In a power distribution system, it is important to stabilize the voltage of the power distribution line without being affected by load fluctuations. Therefore, in the prior technologies, the voltage of the power distribution line has been stabilized by an LRT (Load Ratio control Transformer, on-load tap changer) tap and a voltage regulator such as an SVR (Step Voltage Regulator): the LRT tap is provided in a distributing substation to regulate the sending voltage; and the SVR is connected to a necessary point of the power distribution line to regulate the voltage.

Further, in the case where the load fluctuates gradually, these voltage stabilizing means are capable of stabilizing the voltage without any problem, but in the case where the load fluctuates rapidly, the voltage regulator like the SVR becomes unable to follow up. Accordingly, in recent years, application of a VAR compensating system (SVC: Static Var Compensator) has been considered.

The VAR compensating systems that compensate the voltage fluctuations in the power distribution system, and the VAR compensating methods in the related art are disclosed, for example, in JP 5-53668 A and JP 11-155236 A.

In these prior VAR compensating systems, the VAR compensator is connected to the power distribution line (power distribution system), and the voltage of the power distribution line is detected at the connecting point by a voltage detection circuit, and subsequently the reactive power is compensated so that the voltage may have a voltage command reference value. The voltage detection circuit includes, for example, a filter and a rectification circuit to compute amplitude of the voltage of the power distribution line at the connecting point, and a three-phase averaging circuit (three-phase average value computing circuit).

Thus, the voltage of the power distribution line is stabilized by applying the LTR at the distributing substation and the voltage regulator like the SVR when the load fluctuates gradually, and by applying the VAR compensator when the load fluctuates rapidly.

Additionally, in recent years, attention has been focused on clean natural energy power generation and a cogeneration system with high thermal efficiency because of the problems such as the global warming and the fossil fuel drainage. Therefore, the number of power sources, such as for wind power generation and photovoltaic power generation capable of providing such power generation, has increased, and many are installed as the distributed power sources near customers.

With the increase of these distributed power sources, not only a power flow from an upper-level system to a lower-level system but also a reverse power flow from the distributed power sources connected with the lower-level system to the upper-level system may occur. Therefore, it is necessary to consider the voltage fluctuations caused by the load fluctuations as well as outputs from the distributed power sources, such as for the wind power generation and the photovoltaic power generation, because the outputs from the distributed power sources fluctuate depending on the weather and the climate conditions.

Further, the distributed power source is not typically connected to three phases in a balanced manner but often connected to the respective phases in an unbalanced manner, in the same manner as the load. Accordingly, the voltage fluctuations may be caused by the three-phase imbalance.

A prior technology of compensating the voltage fluctuations caused by this three-phase imbalance is disclosed, for example, in JP 8-65892 A as a method of compensating the unbalanced voltages, and a system therefor. JP S64 5329 A discloses a VAR compensator comprising a voltage detection circuit configured to detect voltage fluctuations in a power distribution system, the VAR compensator being configured to stabilize the voltage in the power distribution system by controlling reactive power to be injected into the power distribution system based on an output signal from the voltage detection circuit.

Summary of Invention

Technical Problem

However, in the prior VAR compensating systems including those disclosed in JP 5-53668 A and JP 11-155236 A, the voltage is regulated such that a three-phase average value becomes a reference voltage command value, for example. The three-phase average value is an average value of absolute values in the respective phases of the three-phase AC voltages (referred to as three-phase voltages, as necessary). However, in the case where the three-phase imbalance is large, the three-phase average value of the voltage amplitudes does not necessarily become an intermediate value between a phase voltage having a maximum voltage amplitude and a phase voltage having a minimum voltage amplitude. More specifically, there is a problem in which the voltage value of a certain phase may depart from a predetermined range.

Also, in the technology of JP 8-65892 A in which an imbalance compensation circuit configured to, for example, detect a reverse phase component and compensate the imbalance is added to the VAR compensator, only the certain phase tends to output a large amount of reactive power because the imbalance is compensated by outputting the reactive power from each phase so as to eliminate the reverse phase component. As a result, a certain phase may have a problem in which a standby amount of the reactive power prepared for next voltage fluctuations is possibly limited.

The present invention has been made in view of the foregoing circumstances, and an object of the present invention is to provide a VAR compensating system capable of maintaining the voltages of the respective three phases in a power distribution system within a predetermined range even in the system where the three phases are largely unbalanced.

According to the present invention the above problems are solved with a VAR compensating system and a VAR compensating method comprising the features of claims 1, 6 and 8, respectively. Dependent claims are directed on features of preferred embodiments of the invention.

According to the present invention, the VAR compensating system computes a maximum deviation intermediate value of the three-phase voltages in the power distribution system, and then injects the reactive power into the power distribution system based on the maximum deviation intermediate value so as to maintain the voltages in the entire power distribution system within a predetermined range.

Advantageous Effects of Invention

Thus, according to the present invention, it is possible to provide a VAR compensating system capable of maintaining the voltages of the respective three phases in the power distribution system within a predetermined range even in a system where the three phases are largely unbalanced.

Brief Description of Drawings

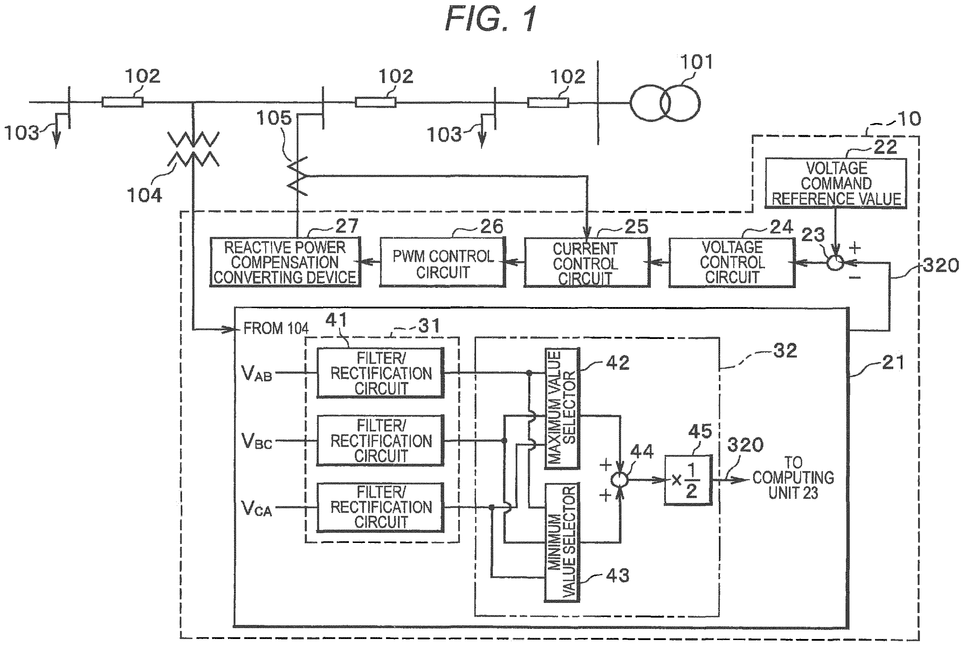

FIG. 1 is a configuration diagram illustrating a VAR compensator and a VAR compensating system according to an embodiment of the present signal from the voltage detection circuit.

With the above configuration, the VAR compensator computes a maximum deviation intermediate value of the three-phase voltages in the power distribution system, and then injects the reactive power into the power distribution system based on the maximum deviation intermediate value so as to maintain the voltages in the entire power distribution system within a predetermined range.

Advantageous Effects of Invention

Thus, according to the present invention, it is possible to provide the VAR compensator capable of maintaining the voltages of the respective three phases in the power distribution system within the predetermined range even in the system where the three phases are largely unbalanced.

Brief Description of Drawings

FIG. 1 is a configuration diagram illustrating a VAR compensator and a VAR compensating system according to an embodiment of the present invention.
FIG. 2 is a configuration diagram illustrating a VAR compensator and a VAR compensating system according to a comparative example.
FIG. 3 is a diagram in which the functions and the effects are compared, when one-phase voltage largely fluctuates, between a case of controlling a maximum deviation intermediate value according to the embodiment of the present invention and a case of controlling a three-phase average value according to the method of detecting the voltage as the comparative example.
FIG. 4 is a diagram in which the functions and the effects are compared, when two-phases voltages largely fluctuate, between the case of controlling the maximum deviation intermediate value according to the embodiment of the present invention and the case of controlling the three-phase average value according to the method of detecting the voltage as the comparative example.

Description of Embodiments

An embodiment according to the present invention will be hereinafter described with reference to the drawings.
Note that the following description covers not only a VAR compensator but also a VAR compensating system and a VAR compensating method.

(Embodiment)

FIG. 1 is a configuration diagram illustrating a VAR compensator and a VAR compensating system according to an embodiment of the present invention.
In FIG. 1, power is supplied to each load 103 from a distributing substation 101 via a power distribution line 102, and the VAR compensator (reactive power compensating means) 10 is connected to a predetermined point of the power distribution system.

<Configuration and functions of VAR compensator (reactive power compensating means) 10>

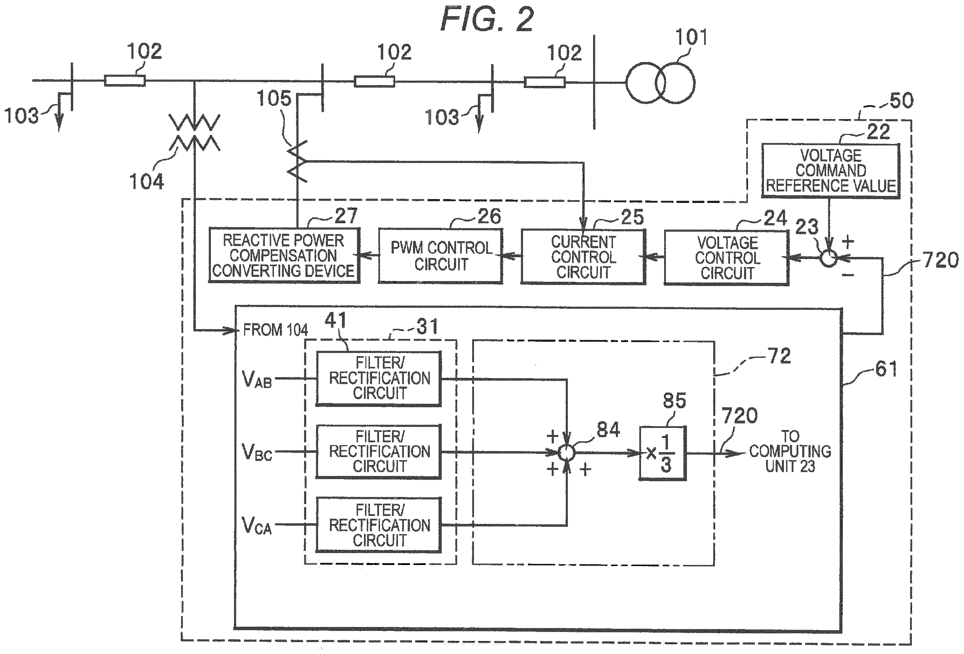

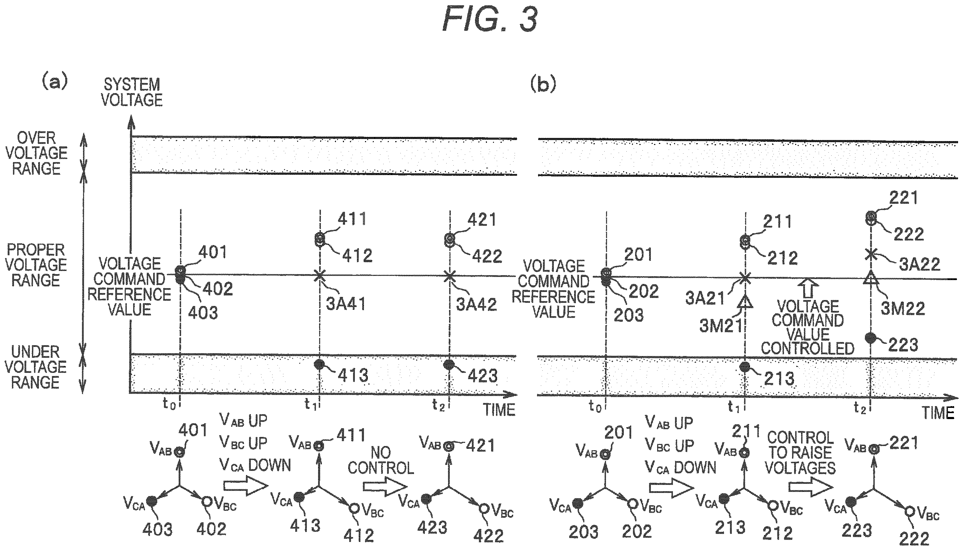

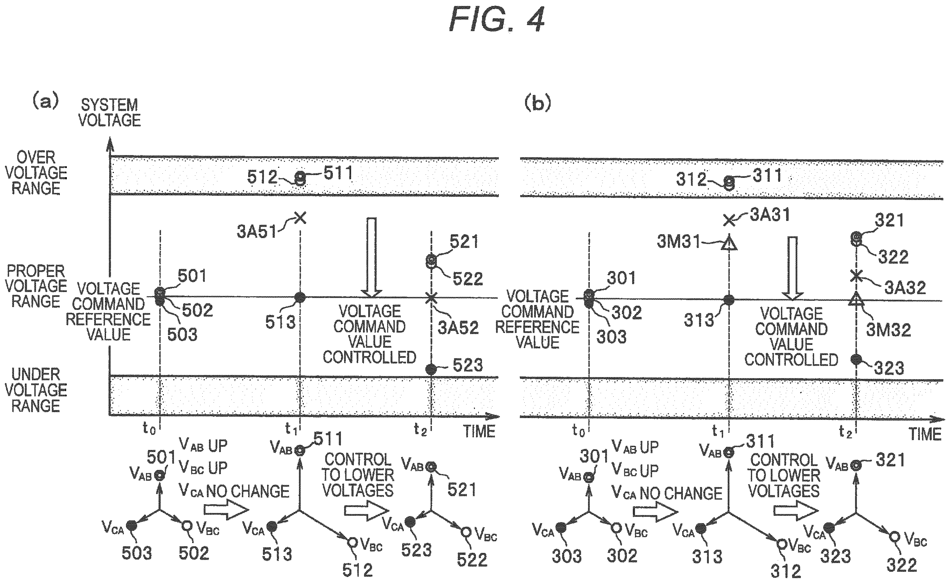

The VAR compensator (reactive power compensating means) 10 according to the embodiment of the present invention includes a voltage detection circuit (voltage detection means) 21, a computing unit (computing means) 23, a voltage control circuit (voltage control means) 24, a current control circuit (current control means) 25, a PWM (Pulse Width Modulation) control circuit (PWM control means) 26, a reactive power compensation converting device (reactive power compensation converting means) 27, and a voltage command reference value (circuit for a voltage command reference value, or means for a voltage command reference value) 22.
Note that the above-mentioned "device", "circuit", and "unit" included in the VAR compensator correspond to the "means" in the VAR compensating system. Further, the terms related to the "means" will be omitted in the description below as necessary.
Three-phase AC voltages (three-phase voltages) $V_{AB}$, $V_{BC}$, and $V_{CA}$ of the power distribution system are suitably converted (transformed) via a voltage transformer 104 installed in the power distribution system, and then input to the voltage detection circuit 21 provided in the VAR compensator 10.
The voltage detection circuit 21 performs arithmetic processing of the three-phase AC voltages $V_{AB}$, $V_{BC}$, and $V_{CA}$ and then outputs, to the computing unit 23, a control signal 320 which is a result of the arithmetic processing.
Note that the configuration of the voltage detection circuit 21 and the detail of the arithmetic processing will be described later.
The computing unit 23 compares the control signal 320 with the voltage command reference value 22. The control signal 320 is output from the voltage detection circuit 21, and the voltage command reference value 22 is a value in which a proper voltage value in the power distribution system is reflected. The computing unit 23 outputs, to the voltage control circuit 24, a signal which is a computing result of the comparison.
Meanwhile, the output value of the voltage command reference value 22 corresponds to a voltage command reference value in FIGS. 3 and 4 described later; however, a high voltage value which is a proper reference value of the three-phase AC voltages $V_{AB}$, $V_{BC}$, and $V_{CA}$ in the power distribution line is not used in the computation by the computing unit 23.
In the case where the voltage detection circuit 21 is formed of a digital circuit and outputs digital signals 1 and 0, the voltage command reference value also represents the proper reference value of the three-phase AC voltages $V_{AB}$, $V_{BC}$, and $V_{CA}$ by the digital signal.
Further, in the case where the voltage detection circuit 21 is formed of an analog circuit, the three-phase AC voltages $V_{AB}$, $V_{BC}$, and $V_{CA}$ are converted by the voltage transformer 104, and the voltage converted at the same rate as when supplied to the voltage detection circuit 21 or the voltage corresponding thereto is used as an output value of the voltage command reference value 22.
Thus, the "voltage command reference value" in FIGS. 1 and 2 and the "voltage command reference value" in FIGS. 3 and 4 do not necessarily match because the reduction ratio of values and the representation form of signals are sometimes different from each other; however, both are simply indicated as the corresponding values.
In response to the output signal from the computing unit 23, the voltage control circuit 24 outputs, to the current control circuit 25, a voltage control signal such that the control signal 320 output from the voltage detection circuit 21 may match the voltage command reference value 22. This voltage control signal controls reactive voltage of the reactive power to be sent to the power distribution system.
In response to the signal from the voltage control circuit 24 and an output signal from a current transformer 105, the current control circuit 25 outputs, to the PWM control circuit 26, a current control signal such that the current has a proper amperage. The current transformer 105 measures the current between the reactive power compensation converting device 27 and the power distribution system. This current control signal controls reactive current of the reactive power to be sent to the power distribution system.

In response to the output signal from the current control circuit 25, the PWM control circuit 26 generates a PWM signal in which the intention of the output signal may be reflected, and then outputs a control signal to the reactive power compensation converting device 27.

In response to the PWM signal from the PWM control circuit 26, the reactive power compensation converting device 27 generates the reactive power and supplies the reactive power to the power distribution system.

After the power distribution line of the power distribution system receives the reactive power from the reactive power compensation converting device 27, the voltage imbalance among the three-phase AC voltages $V_{AB}$, $V_{BC}$, and $V_{CA}$ is improved in the power distribution system.


<<Voltage detection circuit (voltage detection means) 21>>


Next, the configuration and the functions of the voltage detection circuit (voltage detection means) 21 provided in a control block of the VAR compensator 10 will be described.

In FIG. 1, the voltage detection circuit 21 includes a three-phase amplitude computing circuit (three-phase amplitude computing means) 31 and a maximum deviation intermediate value computing circuit (maximum deviation intermediate value computing means) 32.

The three-phase AC voltages $V_{AB}$, $V_{BC}$, and $V_{CA}$ input from the voltage transformer 104 are the voltages of analog quantities and are collectively digitized in the three-phase amplitude computing circuit 31. The digitized voltages are then respectively input to three amplitude computing circuits (amplitude computing means) 41 provided in the three-phase amplitude computing circuit 31 in which absolute values of the respective phase voltages of the three-phase AC voltages are calculated. Each amplitude computing circuit 41 includes a filter and a rectification circuit. Subsequently, signals are respectively output from the three amplitude computing circuits 41 to the maximum deviation intermediate value computing circuit 32.

Note that the amplitude computing circuits 41 in FIGS. 1 and 2 are indicated as the "filter/rectification circuit" to represent more specific functions thereof.

Additionally, the three-phase AC voltages $V_{AB}$, $V_{BC}$, and $V_{CA}$ in the power distribution system are input to the voltage detection circuit 21. Then, as also illustrated in FIG. 1, the voltages are actually transformed by the voltage transformer 104 so that the sufficiently lowered analog voltages are input to the voltage detection circuit 21. Therefore, in FIG. 1, the three-phase AC voltages $V_{AB}$, $V_{BC}$, and $V_{CA}$ illustrated as the input voltages indicate that the voltages in which the three-phase AC voltages $V_{AB}$, $V_{BC}$, and $V_{CA}$ are reflected are input.


<<Maximum deviation intermediate value computing circuit (maximum deviation intermediate value computing means) 32>>


In FIG. 1, this maximum deviation intermediate value computing circuit (deviation intermediate value computing circuit, maximum deviation intermediate value computing means, and deviation intermediate value computing means) 32 includes a maximum value selector (maximum value selecting means) 42, a minimum value selector (minimum value selecting means) 43, an adder (adding means) 44, and a multiplier (multiplying means) 45.

The maximum value selector 42 has a function to obtain a voltage value of a phase having a maximum value out of the input three-phase AC voltages $V_{AB}$, $V_{BC}$, and $V_{CA}$. That is, the maximum value is calculated as follows:

$$\text{MAX VALUE} = \text{MAX}\{|V_{AB}|,\ |V_{BC}|,\ |V_{CA}|\}\ \dots\ \text{Formula (1)}$$

Also, the minimum value selector 43 has a function to obtain a voltage value of a phase having a minimum value out of the input three-phase AC voltages $V_{AB}$, $V_{BC}$, and $V_{CA}$. That is, the minimum value is calculated as follows:

$$\text{MIN VALUE} = \text{MIN}\{|V_{AB}|,\ |V_{BC}|,\ |V_{CA}|\}\ \dots\ \text{Formula (2)}$$

Note that the voltage magnitude of each phase indicates the amplitude value.

Further, the adder 44 and the multiplier 45 are used: the adder 44 adds the maximum value obtained from the Formula (1) to the minimum value obtained from the Formula (1), and a result of the addition is multiplied by 1/2 and the multiplier 45. Thus, the following maximum deviation intermediate value is obtained as an output (control signal 320) of the multiplier 45.

$$\text{Maximum deviation intermediate value} = (1/2) \cdot \{\text{MAX VALUE} + \text{MIN VALUE}\} = (1/2) \cdot \{\text{MAX}(|V_{AB}|, |V_{BC}|, |V_{CA}|) + \text{MIN}(|V_{AB}|, |V_{BC}|, |V_{CA}|)\} \ldots \text{Formula (3)}$$

This indicates that an intermediate value between the voltage value of the phase having the maximum voltage (MAX VALUE) and the voltage value of the phase having the minimum voltage (MIN VALUE) is to be output.

As described above, the intermediate value between the voltage value of the phase having the maximum voltage and the voltage value of the phase having the minimum voltage is output when the voltages of the three phases are unbalanced. When the voltages of the three phases are balanced, on the other hand, the voltage amplitudes are output as they are because the respective voltage amplitudes are the same.

The voltage detection circuit thus configured may be applied to both cases where the voltages of the three phases are balanced and unbalanced.

Meanwhile, the detail of the effects provided by this method will be described later in comparison with a comparative example.

(VAR compensator as a comparative example)

FIG. 2 is a configuration diagram illustrating a VAR compensator 50 and a VAR compensating system (50) according to a comparative example.

In FIG. 2, the part different from FIG. 1 is a voltage detection circuit 61. A three-phase average value computing circuit 72 is provided in the voltage detection circuit 61 of the VAR compensator 50 in the comparative example, instead of the maximum deviation intermediate value computing circuit 32 provided in the voltage detection circuit 21 in the embodiment.

Therefore, a description will be given only for the voltage detection circuit 61 and the three-phase average value computing circuit 72 in the VAR compensator 50 of the comparative example. Further, a description will be omitted for other elements same as those illustrated in FIG. 1.

<<Voltage detection circuit 61 and three-phase average value computing circuit 72>>

In FIG. 2, the voltage detection circuit 61 includes a three-phase amplitude computing circuit 31 and the three-phase average value computing circuit 72.

Absolute values of the voltages in the respective phases of the three-phase AC voltages are respectively calculated and then input to the three-phase average value computing circuit 72 from three amplitude computing circuits 41 provided in the three-phase amplitude computing circuit 31. Each of the amplitude computing circuits 41 includes a filter and a rectification circuit.

The three-phase average value computing circuit 72 includes an adder 84 and a multiplier 85.

Signals of the absolute values of the voltages in the respective phases of the three-phase AC voltages, which are respectively input to the adder 84, are added and then multiplied by 1/3 in the multiplier 85.

The above calculation is expressed by Formula (4) below, indicating that an average value of the absolute values of the voltages in the respective phases of the three-phase AC voltages is calculated.

$$\text{Average value of three phases} = (1/3) \cdot (|V_{AB}| + |V_{BC}| + |V_{CA}|) \ldots \text{Formula (4)}$$

An output (control signal 720) from the three-phase average value computing circuit 72 obtained from the Formula (4) is input to a computing unit 23 as an output signal from the voltage detection circuit 61.

(Differences in functions and effects between present embodiment and comparative example)

The effects provided by the embodiment of the present invention will be described below with references to the drawings.

FIGS. 3 and 4 are diagrams in which the functions and the effects are compared, when the voltage largely fluctuates, between a case of controlling a maximum deviation intermediate value according to the embodiment of the present invention and a case of controlling a three-phase average value according to the method of detecting the voltage as the comparative example.

FIG. 3 is the diagram illustrating the case where one-phase voltage out of the three-phase AC voltages $V_{AB}$, $V_{BC}$, and $V_{CA}$ largely changes, and FIG. 4 is the diagram illustrating the case where two-phase voltages out of the three-phase AC voltages $V_{AB}$, $V_{BC}$, and $V_{CA}$ largely change. Note that the case where the voltages of all three phases largely change does not belong to the category of three-phase imbalance, and therefore no description will be given for such a case with reference to the drawings.

<Case where one-phase voltage largely changes>

First, a description will be given for the case where one-phase voltage out of the three-phase AC voltages $V_{AB}$, $V_{BC}$, and $V_{CA}$ largely changes with reference to FIG. 3.

FIG. 3 is the diagram in which the functions and the effects are compared, when one-phase voltage largely fluctuates, between the case of controlling the maximum deviation intermediate value according to the embodiment of the present invention and the case of controlling the three-phase average value according to the method of detecting the voltage as the comparative example.

FIG. 3(a) is a diagram illustrating the case of the VAR compensator 50 according to the comparative example, and FIG. 3(b) is a diagram illustrating the case of the VAR compensator 10 according to the embodiment.

Note that the vertical axes in FIGS. 3(a) and 3(b) represent system voltage in the power distribution system, and an area of "proper voltage range" lies approximately in the center. Further, an area of "over voltage range" and an area of "under voltage range" lie above and below the area of "proper voltage range" respectively.

Additionally, in FIGS. 3(a) and 3(b), the horizontal axes represent the time such as $t_0$, $t_1$, and $t_2$, and how the relation of the three-phase voltages changes with the time is illustrated for comparison.

Furthermore, a "voltage command reference value" is set approximately in the middle of the "proper voltage range". Centering around the "voltage command reference value", $V_{AB}$, $V_{BC}$, and $V_{CA}$ marked with ⊙, ◯, and ● in the center or on the upper/lower side of the "voltage command reference value" are illustrated as the absolute values of the voltages.

Further, in the bottom column of the respective voltages thus illustrated, the relation between the vectors of the voltages $V_{AB}$, $V_{BC}$, and $V_{CA}$ marked with ⊙, ◯, and ● are illustrated.

<<Comparative example in FIG. 3(a), three-phase average value is to be controlled>>

First, a description will be given for the comparative example in FIG. 3(a) where the three-phase average value is controlled.

Beginning with time $t_0$, it is indicated that $V_{AB}$(⊙) 401, $V_{BC}$(◯) 402, and $V_{CA}$(●) 403 are in a balanced state, and the respective phases are controlled in accordance with the voltage command reference value, having the same voltage amplitude, i.e., the three-phase average value.

Therefore, the relation between the vectors is symmetric and the voltages are equally balanced in the vector diagram of $V_{AB}$(⊙)401, $V_{BC}$(◯)402, and $V_{CA}$(●)403.

Further, $V_{AB}$(⊙))401, $V_{BC}$(◯)402, and $V_{CA}$(●)403 are illustrated substantially in an overlapping manner in the vicinity of the voltage command reference value. In the drawing, the voltages are intentionally illustrated in different positions for the purpose of description, but the actual positions substantially overlap.

Next, at time $t_1$, it is indicated that the voltages (voltage amplitudes) of $V_{AB}$(⊙)411 and $V_{BC}$(◯)412 slightly rise from the three-phase balanced state at time $t_0$ while the voltage (voltage amplitude) of $V_{CA}$(●)413 largely drops and enters the under voltage range.

However, in the three-phase average value computing circuit 72, the average of the absolute values of $V_{AB}$(⊙))411, $V_{BC}$(◯)412, and $V_{CA}$(●)413 is a three-phase average value (×)3A41, which is substantially equal to the voltage command reference value. Therefore, the voltage detection circuit 61 (FIG. 2) does not output, to the computing unit 23, a control signal 720 to command a change.

Therefore, at time $t_2$, $V_{AB}$, $V_{BC}$, and $V_{CA}$ do not change from the state at time $t_1$. In other words, the state of three-phase imbalance is not improved.

Further, if there is no state change afterward, the state of three-phase imbalance continues, and $V_{CA}$(●)423 stays out of the proper voltage range.

Meanwhile, since a three-phase average value (×)3A42 is substantially equal to the voltage command reference value at time $t_2$, $V_{AB}$(⊙)421, $V_{BC}$(◯)422, and $V_{CA}$(●)423 keep the current states.

The above-described VAR compensator 50, as the comparative example, which employs the three-phase average value computing circuit 72 is not capable enough in terms of improving the state of three-phase imbalance.

<<Present embodiment in FIG. 3(b), maximum deviation intermediate value is to be controlled>>

Next, a description will be given for the embodiment of the present invention in FIG. 3(b) where the maximum deviation intermediate value is controlled.

Beginning with time $t_0$ in FIG. 3(b), $V_{AB}(\odot)201$, $V_{BC}(\bigcirc)202$, and $V_{CA}(\bullet)203$ are in a balanced state. Therefore, the relation between the vectors is symmetric and the voltages are equally balanced in the vector diagram of $V_{AB}(\odot)$)201, $V_{BC}(\bigcirc)202$, and $V_{CA}(\bullet)203$.

Further, $V_{AB}(\odot)201$, $V_{BC}(\bigcirc)202$, and $V_{CA}(\bullet)203$ are illustrated substantially in an overlapping manner in the vicinity of the voltage command reference value. In the drawing, the voltages are intentionally illustrated in different positions for the purpose of description, but the actual positions substantially overlap.

Next, at time $t_1$, it is indicated that the voltages (voltage amplitudes) of $V_{AB}(\odot)211$ and $V_{BC}(\bigcirc)212$ slightly rise from the three-phase balanced state at time $t_0$ while the voltage (voltage amplitude) of $V_{CA}(\bullet)213$ largely drops and enters the under voltage range.

A three-phase average value ($\times$)3A21 in this case, which is an average of the absolute values of $V_{AB}(\odot)211$, $V_{BC}(\bigcirc)212$, and $V_{CA}(\bullet)213$, is the same value as the three-phase average value ($\times$)3A41 at time $t_1$ in FIG. 3(a).

However, according to the present embodiment, the voltage detection circuit 21 (FIG. 1) executes control using the maximum deviation intermediate value computing circuit 32 (FIG. 1) and using a maximum deviation intermediate value ($\Delta$)3M21.

The maximum deviation intermediate value ($\Delta$)3M21 is an intermediate value (average value) between the voltage value $V_{AB}(\odot)211$ of the phase having the maximum voltage and the voltage value $V_{CA}(\bullet)213$ of the phase having the minimum voltage.

At time $t_1$ in FIG. 3(b), the maximum deviation intermediate value ($\Delta$)3M21 is lower than the three-phase average value ($\times$)3A21.

Therefore, since the voltage detection circuit 21 (FIG. 1) outputs this lower value to the computing unit 23, the computing unit 23 compares this value with the voltage command reference value and then outputs, to the voltage control circuit 24, a command to raise all voltages $V_{AB}(\odot)211$, $V_{BC}(\bigcirc)212$, and $V_{CA}(\bullet)213$ by the voltage corresponding to the difference. Subsequently, the reactive power is supplied to the power distribution system from the reactive power compensation converting device 27 via the current control circuit 25 and the PWM control circuit 26.

At time $t_2$ in FIG. 3(b), the voltages $V_{AB}(\odot)211$, $V_{BC}(\bigcirc)212$, and $V_{CA}(\bullet)213$ have been raised compared to those at time $t_1$.

With this voltage rise, $V_{CA}(\bullet)223$ goes out of the under voltage range and enters the proper voltage range.

At this point, the maximum deviation intermediate value ($\Delta$)3M22, which is the intermediate value (average value) between the voltage value $V_{AB}(\odot)221$ of the phase having the maximum voltage and the voltage value $V_{CA}(\bullet)223$ of the phase having the minimum voltage, matches the voltage command reference value, thereby stabilizing the state.

Meanwhile, the state at time $t_1$ in FIG. 3(b) corresponds to the stable state obtained by controlling the three-phase average value at time $t_2$ according to the comparative example in FIG. 3(a).

Also, the state at time $t_2$ in FIG. 3(b) is the stable state obtained by controlling the maximum deviation intermediate value according to the present embodiment.

Therefore, comparing the state at time $t_1$ with the state at time $t_2$ in FIG. 3(b) is to compare controlling the three-phase average value with controlling the maximum deviation intermediate value.

In FIG. 3(b), the state at time $t_2$ (where all of $V_{AB}(\odot)221$, $V_{BC}(\bigcirc)222$, and $V_{CA}(\bullet)223$ are in the proper voltage range) is more balanced than the state at time $t_1$ (where the $V_{CA}(\bullet)213$ is in the under voltage range).

Therefore, it can be said that controlling the maximum deviation intermediate value according to the present embodiment is superior to controlling the three-phase average value according to the comparative example.

Also, as described above, in the case where the three-phase imbalance is large, the voltage of a certain phase may be out of the proper voltage range even though the three-phase average value is equal to the voltage command reference value, but in the case where the maximum deviation intermediate value is controlled, a control effect may be provided in which a phase voltage being far out of the proper voltage range may be corrected to the voltage within the proper voltage range.

<Case where two-phase voltages largely change>

Next, a description will be given for the case where the two-phase voltages largely fluctuate with reference to FIG. 4.

FIG. 4 is the diagram where the functions and the effects are compared, when the two-phase voltages largely fluctuate, between the case of controlling the maximum deviation intermediate value according to the embodiment of the present invention and the case of controlling the three-phase average value according to the method of detecting the voltage as the comparative example.

FIG. 4(a) is a diagram illustrating a case according to the comparative example, and FIG. 4(b) is a diagram illustrating a case according to the present embodiment.

Note that, in the same manner as FIGS. 3(a) and 3(b), the vertical axes in FIGS. 4(a) and 4(b) represent the system voltage in the power distribution system, and an area of "proper voltage range" lies approximately in the center. Further, an area of "over voltage range" and an area of "under voltage range" lie above and below the area of "proper voltage range" respectively.

Additionally, in the same manner as FIGS. 3(a) and 3(b), the horizontal axes in FIGS. 4(a) and 4(b) represent the time such as $t_0$, $t_1$, and $t_2$, and how the relation of the three-phase voltages changes with the time is illustrated to compare.

Furthermore, a "voltage command reference value" is set approximately in the middle of the "proper voltage range". Centering around the "voltage command reference value", $V_{AB}$, $V_{BC}$, and $V_{CA}$ marked with ⊙, ○, and ● in the center or on the upper/lower side of the "voltage command reference value" are illustrated as the absolute values of the voltages.

Further, in the bottom column of the respective voltages thus illustrated, the vector relations of the voltages $V_{AB}$, $V_{BC}$, and $V_{CA}$ marked with ⊙, ○, and ● are illustrated.

<<Comparative example in FIG. 4(a), three-phase average value is to be controlled>>

First, a description will be given for the comparative example in FIG. 4(a) where the three-phase average value is controlled.

Beginning with time $t_0$, $V_{AB}$(⊙)501, $V_{BC}$(○)502, and $V_{CA}$(●)503 are in a balanced state. Therefore, the relation between the vectors is symmetric and the voltages are equally balanced in the vector diagram of $V_{AB}$(⊙)501, $V_{BC}$(○)502, and $V_{CA}$(●)503.

Further, $V_{AB}$(⊙)501, $V_{BC}$(○)502, and $V_{CA}$(●)503 are illustrated substantially in an overlapping manner in the vicinity of the voltage command reference value. In the drawing, the voltages are intentionally illustrated in different positions for the purpose of description, but the actual positions substantially overlap.

Next, at time $t_1$, it is indicated that the voltages $V_{AB}$(⊙)511 and $V_{BC}$(○)512 rise and enter the over voltage range while the voltage value of $V_{CA}$(●)513 does not change from that at time $t_0$.

At this point, the average of the absolute values of $V_{AB}$(⊙)511, $V_{BC}$(○)512, and $V_{CA}$(●)513 is a three-phase average value (×)3A51 in the three-phase average value computing circuit 72 (FIG. 2).

Therefore, $V_{AB}$(⊙)511, $V_{BC}$(○)512, and $V_{CA}$(●)513 are to be collectively corrected by a difference between the three-phase average value (×)3A51 and the voltage command reference value.

As a result, the voltages are controlled as indicated by $V_{AB}$(⊙)521, $V_{BC}$(○)522, and $V_{CA}$(●)523 at time $t_2$.

Since calculation of the three-phase average value (×)3A51 is affected by the two voltage values of $V_{AB}$(⊙)511 and $V_{BC}$(○)512 which have risen and entered the over voltage range, the voltage value of the three-phase average value (×)3A51 becomes high.

Therefore, at time $t_2$, $V_{CA}$(●)513 is largely corrected down to the vicinity of the lower limit of the proper voltage range as indicated by the $V_{CA}$(●)523 although it was close to the voltage command reference value at time $t_1$.

As a result, the three phases fall into the unbalance state in which $V_{CA}$(●)523 has a significantly small value as indicated in the vector diagram of $V_{AB}$(⊙)521, $V_{BC}$(○)522, and $V_{CA}$(●)523 at time $t_2$.

At this point, a three-phase average value (×)3A52 matches the voltage command reference value. Therefore, if there is no state change afterward, the state of three-phase imbalance continues, and $V_{CA}$(●)523 stays in the vicinity of the boundary between the under voltage range and the proper voltage range.

The above-described VAR compensator 50, as the comparative example, which employs the three-phase average value computing circuit 72 is not capable enough in terms of improving the state of three-phase imbalance.

<<Present embodiment in FIG. 4(b), maximum deviation intermediate value is to be controlled>>

Next, a description will be given for the embodiment of the present invention in FIG. 4(b) where the maximum deviation intermediate value is controlled.

Beginning with time $t_0$ in FIG. 4(b), three-phase voltages $V_{AB}$(⊙)301, $V_{BC}$(○)302, and $V_{CA}$(●)303 are in a balanced state. Therefore, the relation between the vectors is symmetric and the voltages are equally balanced in the vector diagram of $V_{AB}$(⊙)301, $V_{BC}$(○)302, and $V_{CA}$(●)303.

Further, $V_{AB}$(⊙)301, $V_{BC}$ (0)302, and $V_{CA}$(●)303 are illustrated substantially in an overlapping manner in the vicinity of the voltage command reference value. In the drawing, the voltages are intentionally illustrated in different positions for the purpose of description, but the actual positions substantially overlap.

Next, at time $t_1$, it is indicated that the voltages $V_{AB}(\odot)311$ and $V_{BC}(\bigcirc)312$ rise and enter the over voltage range while the voltage value of $V_{CA}(\bullet)313$ does not change from that at time $t_0$.

Further, referring to the relation between a maximum deviation intermediate value 3M31 and a three-phase average value 3A31 at this point, the maximum deviation intermediate value 3M31 takes the lower value. However, the maximum deviation intermediate value 3M31 is higher than the voltage command reference value.

Since the voltage detection circuit 21 (FIG. 1) outputs this maximum deviation intermediate value 3M31 to the computing unit 23, the computing unit 23 compares the maximum deviation intermediate value 3M31 with the voltage command reference value and then outputs, to the voltage control circuit 24, a command to lower all of $V_{AB}(\odot)311$, $V_{BC}(\bigcirc)312$, and $V_{CA}(\bullet)313$ by the voltage corresponding to the difference. Subsequently, the reactive power is supplied to the power distribution system from the reactive power compensation converting device 27 via the current control circuit 25 and the PWM control circuit 26.

At time $t_2$ in FIG. 4(b), $V_{AB}(\odot)321$, $V_{BC}(O)322$, and $V_{CA}(\bullet)323$ have been lowered in comparison with the state at time $t_1$.

With the voltages rise, $V_{AB}(\odot)321$ and $V_{BC}(\bigcirc)322$ go out of the over voltage range and enter the proper voltage range.

Further, although $V_{CA}(\bullet)323$ is corrected to be lowered, $V_{CA}(\bullet)323$ continues staying within the proper voltage range without entering the under voltage range because the amount of correction is small as the maximum deviation intermediate value 3M31 is lower than the three-phase average value 3A31.

At this point, a maximum deviation intermediate value $(\Delta)$3M32, which is the intermediate value (average value) between the voltage value $V_{AB}(\odot)321$ of the phase having the maximum voltage and the voltage value $V_{CA}(\bullet)323$ of the phase having the minimum voltage, matches the voltage command reference value, thereby stabilizing the state.

The state at time $t_2$ in FIG. 4(a) is obtained by the control using the three-phase average value, and the state at time $t_2$ in FIG. 4(b) is obtained by the control using the maximum deviation intermediate value.

Comparing these cases, the state at time $t_2$ obtained by controlling the maximum deviation intermediate value, in which all of $V_{AB}(\odot)321$, $V_{BC}(\bigcirc)322$, and $V_{CA}(\bullet)323$ are in the proper voltage range, is more balanced than the state at time $t_2$ obtained by controlling the three-phase average value, in which the $V_{CA}(\bullet)523$ is in the vicinity of the lower limit of the proper voltage range.

Therefore, it can be said that controlling the maximum deviation intermediate value according to the present embodiment is superior to controlling the three-phase average value according to the comparative example.

The functions and effects provided by the control using the maximum deviation intermediate value and the control using the three-phase average value have been described above by exemplifying the state of three-phase imbalance with reference to FIGS. 3(a), 3(b), 4(a) and 4(b), and it results in that the control using the maximum deviation intermediate value is superior.

This indicates that when the three phases become unbalanced, priority is to put back all the three-phase AC voltages $V_{AB}$, $V_{BC}$, and $V_{CA}$ to the proper voltage range.

The reason is, therefore, that in the case of maintaining the three-phase AC voltages $V_{AB}$, $V_{BC}$, and $V_{CA}$ between the upper limit and the lower limit of a predetermined proper voltage range, it is an excellent method to focus on the maximum value and the minimum value of the three phases rather than the average value of the three phases (three-phase average) and control the voltages by using the maximum deviation intermediate value in which both the maximum value (MAX VALUE) and the minimum value (MIN VALUE) are equally (fifty-fifty) reflected.

Thus, the present invention provides the control effect in which the three-phase voltages are maintained within the predetermined proper voltage range regardless of the state of the three-phase imbalance. In other words, the present invention may implement an appropriate voltage control regardless of the state of fluctuations even in the event of the voltage fluctuations, such as the three-phase imbalance caused by some load fluctuations or output fluctuations from the distributed power sources, like the power distribution system.

Meanwhile, the state of the three-phase imbalance may be further improved if the three phases are independently controlled; however, it can be said that the control using the maximum deviation intermediate value is the suitable method to collectively control the three phases because of the above-mentioned reason.

Further, in the method of independently controlling the three phases, it is necessary to prepare the voltage detection circuit 21 in FIG. 1 for the respective three phases as well as to configure all of the computing unit 23, the voltage control circuit 24, the current control circuit 25, the PWM control circuit 26, and the reactive power compensation converting device 27 to control the respective three phases, thereby causing a great increase of the circuit scale and providing an extremely expensive device.

In contrast, the controlling method using the maximum deviation intermediate value according to the present embodiment is inexpensive and further superior to the controlling method using the three-phase average value according to the comparative example in the related art as the method of collectively controlling the three phases, as described above.

(Other embodiment)

Note that the present invention is not limited to the above-described embodiment.

The embodiment as the VAR compensator has been described above, but the same is applied to embodiments of a VAR compensating system and a VAR compensating method as stated before.

Also, the configuration of the VAR compensator 10 (FIG. 1) is only an example, and therefore it is possible to add other circuit elements, combine and reconfigure the respective circuits.

Additionally, the voltage detection circuit 21 (FIG. 1) may be a circuit configured by hardware, or arithmetic processing by software. Also, the voltage detection circuit 21 may be either an arithmetic operation by a digital circuit or an arithmetic operation by an analog circuit.

Moreover, the cases where the VAR compensator may function have been described by focusing on the line voltage in the power distribution system, but the VAR compensator may also function for the phase voltages in the distributing substation 101 (FIG. 1) or in a facility corresponding thereto.

(Supplementary notes to present invention and present embodiment)

The object of the present invention is to provide a VAR compensator capable of maintaining the system voltages of the respective phases within a predetermined range, even in a system where three phases are largely unbalanced, by controlling the voltages such that an intermediate value between a maximum value and a minimum value of the three-phase voltages becomes a voltage command reference value, without installing any imbalance compensation circuit in the VAR compensator.

The most distinguished feature of the present embodiment is that, to detect a voltage to be controlled, an intermediate value between a voltage value of a phase having a maximum voltage and a voltage value of a phase having a minimum voltage of three-phase voltages is detected by using the maximum deviation intermediate value computing circuit 32 (FIG. 1), and the voltages of the respective phases are controlled to be within a proper voltage range, even when the three phases are unbalanced, by controlling output of the reactive power in accordance with the intermediate value of the maximum deviation corrected to the reference voltage command value.

The device according to the present embodiment, which is relatively simple and inexpensive as described above, is to serve for the power distribution system in which the three-phase imbalance is likely to occur due to the increase of distributed power sources.

The present embodiment provides a control effect in which the voltages are maintained within the proper voltage range regardless of the state of the three-phase imbalance. In other words, the present invention may implement an appropriate voltage control regardless of the state of fluctuations even when the voltage fluctuations occur, such as the three-phase imbalance caused by some load fluctuations or output fluctuations from the distributed power sources, like the power distribution system.

Meanwhile, the description has been given for the functions and the effects in the respective cases where one-phase voltage/two phase voltages largely change with reference to FIGS. 3 and 4, and a description for the case where all three phase voltages largely change has been omitted. However, since the case where all three phase voltages largely change in the same direction is not the unbalanced state, the three phases are kept in the balanced state even when the three phase voltages are collectively raised or lowered.

The VAR compensator 10 and the voltage detection circuit 21 in FIG. 1 may effectively serve and function for this kind of voltage change caused by the three-phase balance. The reason is that, even in the event of the voltage change caused by the three-phase balance, the maximum deviation intermediate value computing circuit 32 (FIG. 1) computes and outputs a maximum deviation intermediate value corresponding to respective situations: in the case of collectively raising the voltages of three phases, a high value is output; and in the case of collectively lowering the voltages of three phases, a low value is output, and consequently the VAR compensator 10 functions to optimize the voltages by comparison with the voltage command value reference value.

Further, the voltage change caused by the three-phase balance is temporarily handled by the VAR compensator 10 in FIG. 1. Afterward, the voltage of the power distribution line is to be stabilized by the LRT tap and the voltage regulator such as the SVR (Step Voltage Regulator), not by the control of the VAR compensator 10. The LRT tap regulates a sending voltage, and the SVR is connected to a necessary point of the power distribution line to regulate the voltage.

Reference Signs List

10, 50 VAR compensator, reactive power compensating means

21, 61 voltage detection circuit, voltage detection means

22 voltage command reference value

23 computing unit, computing means

24 voltage control circuit, voltage control means

25 current control circuit, current control means

26 PWM control circuit, PWM control means

27 reactive power compensation converting device, reactive power compensation converting means

31 three-phase amplitude computing circuit, three-phase amplitude computing means

32 maximum deviation intermediate value computing circuit, (deviation intermediate value computing circuit), maximum deviation intermediate value computing means (deviation intermediate value computing means)

41 amplitude computing circuit (filter/rectification circuit), amplitude computing means

42 maximum value selector, maximum value selecting means

43 minimum value selector, minimum value selecting means

44, 84 adder, adding means

45, 85 multiplier, multiplying means

72 three-phase average value computing circuit

101 distributing substation

102 line impedance

103 load

104 voltage transformer

105 current transformer

201, 211, 221, 301, 311, 321, 401, 411, 421, 501, 511, 521 $V_{AB}$, voltage value $V_{AB}$

202, 212, 222, 302, 312, 322, 402, 412, 422, 502, 512, 522 $V_{BC}$, voltage value $V_{BC}$

203, 213, 223, 303, 313, 323, 403, 413, 423, 503, 513, 523 $V_{CA}$, voltage value $V_{CA}$

320, 720 control signal

3A21, 3A22, 3A31, 3A32, 3A41, 3A42, 3A51, 3A52 three-phase average value

3M21, 3M22, 3M31, 3M32 maximum deviation intermediate value


## Claims

1. A VAR compensating system comprising:

   voltage detection means (21, 61) configured to detect voltage fluctuations in a power distribution system, the VAR compensating system being configured to stabilize the voltage in the power distribution system by controlling reactive power to be injected into the power distribution system based on an output signal from the voltage detection means (21, 61),
   **characterized in that** the voltage detection means (21, 61) includes deviation intermediate value computing means (32) configured to compute an intermediate value between a voltage value of a phase having a maximum voltage and a voltage value of a phase having a minimum voltage out of three-phase voltages ($V_{AB}$, $V_{BC}$, $V_{CA}$) in the power distribution system,
   a circuit (22) configured to output a voltage command reference value in which a proper voltage value in the power distribution system is reflected;
   a computing unit (23) configured to compare the output signal from the voltage detection circuit (21, 61) with the voltage command reference value;
   a voltage control circuit (24) configured to output a signal that controls reactive voltage of the reactive power to be sent to the power distribution system in response to an output signal from the computing unit (23);
   a current control circuit (25) configured to output a signal that controls reactive current of the reactive power to be sent to the power distribution system in response to the output signal from the voltage control circuit (24).

2. The VAR compensating system according to claim 1, wherein the deviation intermediate value computing circuit (32) comprises:

   a maximum value selector (42) configured to select the voltage value of the phase having a maximum voltage out of the three-phase voltages ($V_{AB}$, $V_{BC}$, $V_{CA}$);
   a minimum value selector (43) configured to select the voltage value of the phase having a minimum voltage out of the three-phase voltages ($V_{AB}$, $V_{BC}$, $V_{CA}$);
   an adder (44) configured to add an output value from the maximum value selector (42) to an output value from the minimum value selector (43); and
a multiplier (45) configured to multiply 1/2 by an output value from the adder (44).

3.  The VAR compensating system according to claim 1,
    wherein the deviation intermediate value computing circuit (32) includes a digital circuit.

4.  The VAR compensating system according to claim 1,
    wherein the deviation intermediate value computing circuit (32) includes an analog circuit.

5.  The VAR compensating system according to claim 1, further comprising:

    a PWM control circuit (26) configured to generate a PWM signal in response to the output signal from the current control circuit (25); and
    a reactive power compensation converting device (27) configured to convert the PWM signal received from the PWM control circuit (26) into the reactive power to be sent to the power distribution system.

6.  The VAR compensating system according to claim 1, **characterized in that**
    the voltage detection means (21, 61) is a voltage detection circuit (21, 61).

7.  The VAR compensating system according to claim 6, wherein the deviation intermediate value computing means (32) comprises:

    maximum value selecting means (42) configured to select a voltage value of a phase having a maximum voltage out of the three-phase voltages ($V_{AB}$, $V_{BC}$, $V_{CA}$) ;
    minimum value selecting means (43) configured to select a voltage value of a phase having a minimum voltage out of the three-phase voltages ($V_{AB}$, $V_{BC}$, $V_{CA}$) ;
    adding means (44) configured to add an output value from the maximum value selecting means (42) to an output value from the minimum value selecting means (43); and
    multiplying means (45) configured to multiply 1/2 by an output value from the adding means (44).

8.  A VAR compensating method for stabilizing voltage in a power distribution system by controlling reactive power to be injected into the power distribution system based on voltage fluctuations in the power distribution system, **characterized in that** the method comprises:

    computing an intermediate value between a voltage value of a phase having a maximum voltage and a voltage value of a phase having a minimum voltage out of three-phase voltages in the power distribution system; and
    controlling the reactive power to be injected into the power distribution system based on a result of the computation,
    outputting a voltage command reference value in which a proper voltage value in the power distribution system is reflected;
    comparing the output signal from the voltage detection circuit with the voltage command reference value;
    outputting a signal that controls reactive voltage of the reactive power to be sent to the power distribution system in response to an output signal from the computing unit;
    outputting a signal that controls reactive current of the reactive power to be sent to the power distribution system in response to the output signal from the voltage control circuit.

**Patentansprüche**

1.  Blindleistungskompensationssystem, das umfasst:

    ein Spannungsdetektionsmittel (21, 61), das ausgestaltet ist, um Spannungsschwankungen in einem Leistungsverteilungssystem zu detektieren, wobei das Blindleistungskompensationssystem ausgestaltet ist, um die Spannung in dem Leistungsverteilungssystem zu stabilisieren, indem es Blindleistung, die in das Leistungsverteilungssystem injiziert werden soll, beruhend auf einem Ausgabesignal von dem Spannungsdetektionsmittel (21, 61) steuert,
    **dadurch gekennzeichnet, dass** das Spannungsdetektionsmittel (21, 61) ein Abweichungszwischenwert-Berechnungsmittel (32) enthält, das ausgestaltet ist, um einen Zwischenwert zwischen einem Spannungswert einer Phase, die eine maximale Spannung aufweist, und einem Spannungswert einer Phase, die eine minimale Spannung aufweist, aus dreiphasigen Spannungen ($V_{AB}$, $V_{BC}$, $V_{CA}$) in dem Leistungsverteilungssystem zu berechnen,

eine Schaltung (22), die ausgestaltet ist, um einen Spannungsbefehl-Referenzwert auszugeben, in welchem ein korrekter Spannungswert in dem Leistungsverteilungssystem reflektiert wird;

eine Berechnungseinheit (23), die ausgestaltet ist, um das Ausgabesignal von der Spannungsdetektionsschaltung (21, 61) mit dem Spannungsbefehl-Referenzwert zu vergleichen;

eine Spannungssteuerungsschaltung (24), die ausgestaltet ist, um ein Signal auszugeben, das eine Blindspannung der Blindleistung, die an das Leistungsverteilungssystem gesendet werden soll, in Ansprechen auf ein Ausgabesignal von der Berechnungseinheit (23) steuert;

eine Stromsteuerungsschaltung (25), die ausgestaltet ist, um ein Signal auszugeben, das einen Blindstrom der Blindleistung, die an das Leistungsverteilungssystem gesendet werden soll, in Ansprechen auf das Ausgabesignal von der Spannungssteuerungsschaltung (24) steuert.

2. Blindleistungskompensationssystem nach Anspruch 1, wobei die Abweichungszwischenwert-Berechnungsschaltung (32) umfasst:

eine Maximalwert-Wahlvorrichtung (42), die ausgestaltet ist, um den Spannungswert derjenigen Phase zu wählen, welche von den dreiphasigen Spannungen ($V_{AB}$, $V_{BC}$, $V_{CA}$) eine maximale Spannung aufweist;

eine Minimalwert-Wahlvorrichtung (43), die ausgestaltet ist, um den Spannungswert derjenigen Phase zu wählen, welche von den dreiphasigen Spannungen ($V_{AB}$, $V_{BC}$, $V_{CA}$) eine minimale Spannung aufweist;

einen Addierer (44), der ausgestaltet ist, um einen Ausgabewert von der Maximalwert-Wahlvorrichtung (42) zu einem Ausgabewert von der Minimalwert-Wahlvorrichtung (43) zu addieren; und

einen Multiplizierer (45), der ausgestaltet ist, um einen Ausgabewert von dem Addierer (44) mit 1/2 zu multiplizieren.

3. Blindleistungskompensationssystem nach Anspruch 1, wobei die Abweichungszwischenwert-Berechnungsschaltung (32) eine digitale Schaltung enthält.

4. Blindleistungskompensationssystem nach Anspruch 1, wobei die Abweichungszwischenwert-Berechnungsschaltung (32) eine analoge Schaltung enthält.

5. Blindleistungskompensationssystem nach Anspruch 1, das ferner umfasst:

eine PWM-Steuerungsschaltung (26), die ausgestaltet ist, um in Ansprechen auf das Ausgabesignal von der Stromsteuerungsschaltung (25) ein PWM-Signal zu erzeugen; und

eine Blindleistungskompensations-Umwandlungsvorrichtung (27), die ausgestaltet ist, um das von der PWM-Steuerungsschaltung (26) empfangene PWM-Signal in die Blindleistung umzuwandeln, die an das Leistungsverteilungssystem gesendet werden soll.

6. Blindleistungskompensationssystem nach Anspruch 1, **dadurch gekennzeichnet, dass** das Spannungsdetektionsmittel (21, 61) eine Spannungsdetektionsschaltung (21, 61) ist.

7. Blindleistungskompensationssystem nach Anspruch 6, wobei das Abweichungszwischenwert-Berechnungsmittel (32) umfasst:

ein Maximalwert-Wahlmittel (42), das ausgestaltet ist, um einen Spannungswert einer Phase zu wählen, die von den dreiphasigen Spannungen ($V_{AB}$, $V_{BC}$, $V_{CA}$) eine maximale Spannung aufweist;

ein Minimalwert-Wahlmittel (43), das ausgestaltet ist, um einen Spannungswert einer Phase zu wählen, die von den dreiphasigen Spannungen ($V_{AB}$, $V_{BC}$, $V_{CA}$) eine minimale Spannung aufweist;

ein Additionsmittel (44), das ausgestaltet ist, um einen Ausgabewert von dem Maximalwert-Wahlmittel (42) zu einem Ausgabewert von dem Minimalwert-Wahlmittel (43) zu addieren; und

ein Multiplikationsmittel (45), das ausgestaltet ist, um einen Ausgabewert von dem Additionsmittel (44) mit 1/2 zu multiplizieren.

8. Blindleistungskompensationsverfahren zum Stabilisieren einer Spannung in einem Leistungsverteilungssystem durch Steuern einer Blindleistung, die in das Leistungsverteilungssystem beruhend auf Spannungsschwankungen in dem Leistungsverteilungssystem injiziert werden soll,

**dadurch gekennzeichnet, dass** das Verfahren umfasst, dass:

ein Zwischenwert zwischen einem Spannungswert einer Phase, die eine maximale Spannung aufweist, und einem Spannungswert einer Phase, die eine minimale Spannung aufweist, aus dreiphasigen Spannungen in dem Leistungsverteilungssystem berechnet wird; und

die Blindleistung, die in das Leistungsverteilungssystem injiziert werden soll, beruhend auf einem Ergebnis der Berechnung gesteuert wird,

ein Spannungsbefehl-Referenzwert ausgegeben wird, in welchem ein korrekter Spannungswert in dem Leistungsverteilungssystem reflektiert wird;

das Ausgabesignal von der Spannungsdetektionsschaltung mit dem Spannungsbefehl-Referenzwert verglichen wird;

ein Signal, das eine Blindspannung der Blindleistung steuert, die an das Leistungsverteilungssystem gesendet werden soll, in Ansprechen auf ein Ausgabesignal von der Berechnungseinheit ausgegeben wird;

ein Signal, das einen Blindstrom der Blindleistung steuert, die an das Leistungsbeurteilungssystem gesendet werden soll, in Ansprechen auf das Ausgabesignal von der Spannungssteuerungsschaltung ausgegeben wird.

**Revendications**

1. Système de compensation de puissance réactive (VAR), comprenant :

un moyen de détection de tension (21, 61) configuré pour détecter des fluctuations de tension dans un système de distribution d'énergie, le système de compensation de puissance réactive étant configuré pour stabiliser la tension dans le système de distribution d'énergie en commandant la puissance réactive à injecter dans le système de distribution d'énergie sur la base d'un signal de sortie du moyen de détection de tension (21, 61), **caractérisé en ce que** le moyen de détection de tension (21, 61) inclut un moyen de calcul de valeur intermédiaire d'écart (32) configuré pour calculer une valeur intermédiaire entre une valeur de tension d'une phase ayant une tension maximale et une valeur de tension d'une phase ayant une tension minimale parmi des tensions triphasées ($V_{AB}$, $V_{BC}$, $V_{CA}$) dans le système de distribution d'énergie,

un circuit (22) configuré pour délivrer une valeur de référence d'ordre de tension qui reflète une valeur de tension adéquate dans le système de distribution d'énergie ;

une unité de calcul (23) configurée pour comparer le signal de sortie du circuit de détection de tension (21, 61) avec la valeur de référence d'ordre de tension ;

un circuit de commande de tension (24) configuré pour délivrer un signal qui commande la tension réactive de la puissance réactive à envoyer au système de distribution d'énergie en réponse à un signal de sortie de l'unité de calcul (23) ;

un circuit de commande de courant (25) configuré pour délivrer un signal qui commande le courant réactif de la puissance réactive à envoyer au système de distribution d'énergie en réponse au signal de sortie du circuit de commande de tension (24).

2. Système de compensation de puissance réactive selon la revendication 1, dans lequel le circuit de calcul de valeur intermédiaire d'écart (32) comprend :

un sélecteur de valeur maximale (42) configuré pour sélectionner la valeur de tension de la phase ayant une tension maximale parmi les tensions triphasées ($V_{AB}$, $V_{BC}$, $V_{CA}$) ;

un sélecteur de valeur minimale (43) configuré pour sélectionner la valeur de tension de la phase ayant une tension minimale parmi les tensions triphasées ($V_{AB}$, $V_{BC}$, $V_{CA}$) ;

un additionneur (44) configuré pour additionner une valeur de sortie du sélecteur de valeur maximale (42) à une valeur de sortie du sélecteur de valeur minimale (43) ; et

un multiplicateur (45) configuré pour multiplier 1/2 par une valeur de sortie de l'additionneur (44).

3. Système de compensation de puissance réactive selon la revendication 1, dans lequel le circuit de calcul de valeur intermédiaire d'écart (32) inclut un circuit numérique.

4. Système de compensation de puissance réactive selon la revendication 1, dans lequel le circuit de calcul de valeur intermédiaire d'écart (32) inclut un circuit analogique.

5. Système de compensation de puissance réactive selon la revendication 1, comprenant en outre :

un circuit de commande PWM (26) configuré pour générer un signal PWM en réponse au signal de sortie du circuit de commande de courant (25) ; et

un dispositif de conversion de compensation de puissance réactive (27) configuré pour convertir le signal PWM reçu du circuit de commande PWM (26) en la puissance réactive à envoyer au système de distribution d'énergie.

6. Système de compensation de puissance réactive selon la revendication 1, **caractérisé en ce que** le moyen de détection de tension (21, 61) est un circuit de détection de tension (21, 61).

7. Système de compensation de puissance réactive selon la revendication 6, dans lequel le moyen de calcul de valeur intermédiaire d'écart (32) comprend :

un moyen de sélection de valeur maximale (42) configuré pour sélectionner une valeur de tension d'une phase ayant une tension maximale parmi les tensions triphasées ($V_{AB}$, $V_{BC}$, $V_{CA}$) ;

un moyen de sélection de valeur minimale (43) configuré pour sélectionner une valeur de tension d'une phase ayant une tension minimale parmi les tensions triphasées ($V_{AB}$, $V_{BC}$, $V_{CA}$) ;

un moyen d'addition (44) configuré pour additionner une valeur de sortie du moyen de sélection de valeur maximale (42) à une valeur de sortie du moyen de sélection de valeur minimale (43) ; et

un moyen de multiplication (45) configuré pour multiplier 1/2 par une valeur de sortie du moyen d'addition (44).

8. Procédé de compensation de puissance réactive pour stabiliser la tension dans un système de distribution d'énergie en commandant la puissance réactive à injecter dans le système de distribution d'énergie sur la base des fluctuations de tension dans le système de distribution d'énergie, **caractérisé en ce que** le procédé comprend les étapes consistant à :

calculer une valeur intermédiaire entre une valeur de tension d'une phase ayant une tension maximale et une valeur de tension d'une phase ayant une tension minimale parmi des tensions triphasées dans le système de distribution d'énergie ; et

commander la puissance réactive à injecter dans le système de distribution d'énergie sur la base du résultat du calcul,

délivrer une valeur de référence d'ordre de tension qui reflète une valeur de tension adéquate dans le système de distribution d'énergie ;

comparer le signal de sortie du circuit de détection de tension avec la valeur de référence d'ordre de tension ;

délivrer un signal qui commande la tension réactive de la puissance réactive à envoyer au système de distribution d'énergie en réponse à un signal de sortie de l'unité de calcul ;

délivrer un signal qui commande le courant réactif de la puissance réactive à envoyer au système de distribution d'énergie en réponse au signal de sortie du circuit de commande de tension.

## FIG. 1

EP 2 717 111 B1

# FIG. 2

EP 2 717 111 B1

# FIG. 3

(a)

SYSTEM VOLTAGE

OVER VOLTAGE RANGE

PROPER VOLTAGE RANGE

VOLTAGE COMMAND REFERENCE VALUE

401
402
403

411
412

3A41

421
422

3A42

UNDER VOLTAGE RANGE

413

423

$t_0$    $t_1$    $t_2$    TIME

$V_{AB}$ UP
$V_{BC}$ UP
$V_{CA}$ DOWN

NO CONTROL

$V_{AB}$ 401
$V_{CA}$    $V_{BC}$
403    402

$V_{AB}$ 411
$V_{CA}$    $V_{BC}$
413    412

$V_{AB}$ 421
$V_{CA}$    $V_{BC}$
423    422

(b)

OVER VOLTAGE RANGE

PROPER VOLTAGE RANGE

VOLTAGE COMMAND REFERENCE VALUE

201
202
203

3A21
3M21

211
212

3M22
VOLTAGE COMMAND VALUE CONTROLLED

221
222
3A22

213

223

$t_0$    $t_1$    $t_2$    TIME

$V_{AB}$ UP
$V_{BC}$ UP
$V_{CA}$ DOWN

CONTROL TO RAISE VOLTAGES

$V_{AB}$ 201
$V_{CA}$    $V_{BC}$
203    202

$V_{AB}$ 211
$V_{CA}$    $V_{BC}$
213    212

$V_{AB}$ 221
$V_{CA}$    $V_{BC}$
223    222

EP 2 717 111 B1

# FIG. 4

EP 2 717 111 B1

**REFERENCES CITED IN THE DESCRIPTION**

**Patent documents cited in the description**

- JP S645329 A
- JP 5053668 A
- JP 11155236 A
- JP 8065892 A